# EUROPÄISCHE PATENTANMELDUNG

(11) **EP 2 256 668 A2**
(43) Veröffentlichungstag der Anmeldung: **01.12.2010**
(21) Anmeldenummer: 10163779.1
(22) Anmeldetag: 25.05.2010
(51) Int. Cl.: G06K 9/72

(54) **Verfahren zum rechnergestützten Erkennen der Identität eines Objekts**

(30) Priorität: 29.05.2009 DE 102009023306
(71) Anmelder: SIEMENS AKTIENGESELLSCHAFT, 80333 München (DE)
(72) Erfinder: Hagl, Peter, 1120, Wien (AT); Moser, Markus, 8055, Graz (AT); Pelzmann, Martin, 8052, Graz (AT); Stöcker, Elmar, 85521, Ottobrunn (DE); Zimmermann, Matthias, 1050, Wien (AT)

(57) **Zusammenfassung**

Die Erfindung betrifft ein Verfahren zum rechnergestützten Erkennen, bei dem das Objekt (3) durch ein Erfassungsgerät (1,2) erfasst wird und mindestens ein objektergänzendes Merkmal (4,5,6,7) des Objekts (3) erkannt wird. Die Objekte (3) mit dem erkannten objektergänzenden Merkmal bilden eine Unterobjektmenge (21) der Objektmenge (21), die aus allen Nutzern gebildet wird. Objektergänzende Merkmale können z.B. am Objekt angebrachte Accessoires wie Brillen, Ohrringe usw. sein. Durch rechnergestütztes Auswerten von objektspezifischen Merkmalen, wie z.B. Gesichtserkennung, aus Objekten (3) der Unterobjektmenge (21) wird die benötigte Rechenleistung zum Identifizieren von Objekten () reduziert.

## Beschreibung

Verfahren zum rechnergestützten Erkennen der Identität eines Objekts.

Die Erfindung betrifft ein Verfahren zum rechnergestützten Erkennen der Identität eines Objekts und eine Vorrichtung zum Durchführen des Verfahrens

Aus Wikipedia, Ausdruck März 2009, "Ausgleichsrechnung" wird eine "FIT" genannte Optimierungsmethode beschrieben, um für eine Reihe von Messdaten die unbekannten Parameter ihres geometrisch physikalischen Modells oder die Parameter einer vorgegebenen Funktion zu bestimmen bzw. zu schätzen. Ziel der Ausgleichungsrechnung ist, dass sich das endgültige Modell bzw. die Funktion den Daten und ihren unvermeidlichen kleinen Widersprüchen bestmöglich anpasst. Im Allgemeinen wird die Berechnung mit der Methode der kleinsten Quadrate durchgeführt.

Aus Wikipedia "Biometrie", Ausdruck vom Januar 2009 wird der Begriff "Biometrie" erläutert. Biometrische Erkennungsverfahren erlauben durch die starke Zunahme der Rechengeschwindigkeit von Computern eine raschen Messung von biologischen Charakteristika und deren Auswertung mit vertretbaren Aufwand und hoher Qualität. Der Einsatz von "Biometrie" ist ein Ansatz, das ungelöste Problem vieler Sicherheitskonzepte zu lösen: Wie verbindet man Identitäten und die dazugehörigen Rechte mit den richtigen physischen Personen, die der Identität entsprechen? Zur rechnergestützten Erkennung von Personen kommt es darauf an, individuelle biometrische Verhaltens- oder Körpercharakteristika zu finden, die sich u. a. durch folgende Eigenschaften auszeichnen:
Messbarkeit:
   Es sollte eine gut definierbare Messgröße existieren, für die es geeignete Sensoren gibt.
Universalität:
   das Charakteristikum kommt bei möglichst vielen Personen vor.
Einmaligkeit:
   der Messwert des Charakteristikums ist für möglichst alle Personen unterschiedlich.
Konstanz:
   der Messwert hängt nicht vom Alter der Person oder dem Messzeitpunkt ab.

Die wichtigsten Erkennungsarten sind die Verifikation und die Identifikation. Bei der Verifikation muss die zu verifizierende Person dem System zunächst ihren Namen oder ihre User ID mitteilen. Danach entscheidet das biometrische System, ob die Person zum zugehörigen Referenzmerkmalsdatensatz gehört oder nicht. Bei der Identifikation offenbart die zu erkennende Person ausschließlich ihr biometrisches Charakteristikum, das System ermittelt daraus durch Vergleich mit den Referenzmerkmalsdatensätzen aller Nutzer den zugehörigen Namen bzw. die User ID.

Ein biometrisches Erkennungssystem zur Identifikation eines Objekts, beispielsweise einer Person, benötigt bei einer großen vorliegenden Anzahl von Objektdatensätzen viel Rechenzeit. Der Abgleich gestaltet sich also mit zunehmendem Umfang der Kontrollgruppe, (d. h. der gespeicherten Profile der Objekte) zeit- und damit auch energieaufwändig. Ebenso sinkt typischerweise die Erkennungsrate.
Oft wird, z.B. bei Zugangssystemen, eine Identifikationszeit benötigt, die unter einer Sekunde liegt. Dabei versteht man üblicherweise unter der Identifikationszeit die Zeit zwischen Erfassen eines Objekts durch eine Erfassungseinheit oder einen Sensor und der Ausgabe des Identifikationsergebnisses.

### Zudem ist die Rechenleistung eines Zugangssystems aus Kostengründen begrenzt

Es ist somit Aufgabe der Erfindung, ein Verfahren und eine Vorrichtung zur Verfügung zu stellen, bei der der benötigte Rechenaufwand zum Identifizieren eines Objekts reduziert wird.

Die Aufgabe der Erfindung wird gelöst durch die Merkmale der unabhängigen Ansprüche.

Vorteilhafte Weiterbildungen der Erfindung sind in den abhängigen Patentansprüchen dargestellt.

Solche Charakteristika werden im Folgenden auch objektspezifische Merkmale eines Objekts genannt.

Ein biometrisches Erkennungssystem setzt sich im Wesentlichen aus den Komponenten Sensor (Messwertaufnehmer, Videokamera), Merkmalsextraktion und Merkmalsvergleich zusammen. So ist eine Videokamera als Sensor für die meisten objektspezifischen Merkmale (Charakteristika) geeignet. Nach Erfassen des Objekts wird eine Merkmalsextraktion durchgeführt, die mittels komplexer Algorithmen alle von der Erfassungseinheit, z.B. Sensor, Videokamera gelieferten Informationen, die nicht die geforderten Merkmalseigenschaften erfüllen, herausgefiltert werden. Es werden als Ergebnis die biometrischen Merkmale geliefert. Der Merkmalsvergleicher errechnet schließlich einen Vergleichswert (Score) zwischen dem in der Einlernphase gespeicherten biometrischen Template und dem aktuellen, von der Merkmalsextraktion gelieferten Datensatz. Über- bzw. unterschreitet dieser Vergleichswert eine einstellbare Schwelle, gilt die Erkennung als erfolgreich.

In der Einlernphase werden die biometrischen Merkmalsdaten (objektspezifische Merkmale) als Referenzmuster in digitaler Form verschlüsselt abgespeichert. Für nächsten Kontakt mit dem biometrischen System wird ein aktuelles Sample aufgenommen und mit dem Referenzmuster (Template) verglichen. Das System entscheidet dann, ob die Ähnlichkeit der beiden Muster hinreichend hoch ist und damit beispielsweise ein Zutritt erfolgen darf oder nicht.

In dem angegebenen Verfahren zum rechnergestützten Erkennen der Identität eines Objekts, beispielsweise einer Person aus einer umfangreichen Objektmenge kann jedem Objekt mindestens ein objektergänzendes Merkmal, beispielsweise ein Accessoire, wie Brille, Halstuch, Krawatte und ein objektspezifisches Merkmal, wie z. B. Gesichtsgeometrie zugeordnet werden. Diese Informationen sind jedem Objekt in einer Datenbank mit der Objektmenge zugeordnet, die als Referenzmerkmalsdatensatz alle "Nutzer" mit den zugehörigen Namen bzw. die User ID enthält.

Ein Erfassungsgerät, beispielsweise eine Videokamera, erfasst das zu identifizierende Objekt. Dabei wird das objektergänzende Merkmal erfasst und mit Hilfe des Vergleichs mit einer objektergänzenden Merkmals-Referenzdatenbank rechnergestützt erkannt, mit der Objektmenge aus der Datenbank verglichen bzw. abgeglichen und eine Unterobjektmenge mit den Objekten gebildet, die jeweils über ein entsprechendes objektergänzendes Merkmal verfügen. Die Unterobjektmenge wird als Referenzdatenbank für das rechnergestützte Erkennen der Identität des Objekts mit Hilfe von biometrischen Erkennungsverfahren von objektspezifischen Merkmalen angezogen.

Vorzugsweise ist ein objektergänzende Merkmal ein Accessoire, das an dem Objekt angebracht ist, wie z. B. eine Brille, ein Halstuch, eine Kopfbedeckung, ein Schal, ein Ohrring oder Ohrknopf, ein Hörgerät usw. Für solche Accessoires sind umfangreiche Datenbanken einfach einrichtbar. Weiterhin ist die Anzahl und Vielfalt der Accessoires begrenzt. Weiterhin ist die Erkennung von Accessoires durch deren oft einfache geometrische Form wenig rechenaufwändig. Personen tendieren immer dazu, die gleiche Brille zu tragen, was für einen hohen Wiedererkennungswert sorgt.

Bevorzugt ist ein objektergänzendes Merkmal eine Information, wie z. B. Ort oder Uhrzeit zum Zeitpunkt der Erfassung des Objekts.

Viele Personen bewegen sich weitgehend in einem festen Orts- und/oder Zeit-Rhythmus. Eine Person kommt zu einen gleichbleibenden Zeitpunkt an dem Ort der Erfassungseinheit vorbei Wird zuerst nach Personen gesucht, die zur gleichen Zeit, auch in den vergangenen Tagen an dieser Stelle des Erfassungsgeräts identifiziert wurden, ist eine erleichterte Erkennung und Identifizierung des Objekts möglich.

Weiterhin ist ein objektergänzendes Merkmal als Information eines an dem Objekt angebrachten RFID Tags ausgebildet.

Objektspezifische Merkmale sind in Form von biometrischen Informationen des Objekts darstellbar, wie z. B. der Gesichtsgeometrie (Abstand der Ohren, der Nase, der Augen zueinander) oder der Gesichtseigenschaften (Ohrengröße, Nasengröße und - form, Augenfarbe, Mundgröße, Größe der Augen, usw.) Bevorzugt erfolgt die Identifizierung der objektspezifischen Merkmale durch biometrische Gesichtserkennung.

Vorzugsweise werden bei erfolgreicher Identifizierung des Objekts am Objekt neu erkannte objektergänzende Merkmale zu dem objektspezifischen Datensatz der Objektmenge hinzugefügt. Dadurch ist eine automatische Verbesserung der Qualität der Datenbank gewährleistet.

Bevorzugt wird auch bei einer nicht 100%-igen Identifizierungssicherheit, beispielsweise bei einer Identifizierungswahrscheinlichkeit des Objekts von größer 90 Prozent (%) ein neu erkanntes objektergänzendes Merkmal im objektspezifischen Datensatz der Datenmenge hinzugefügt.

Dadurch wird die Erkennungssicherheit kontinuierlich verbessert.

Vorzugsweise ist das Erfassungsgerät als Kamera oder Videokamera ausgebildet, das optional auch Orts- und Zeitangaben der Erfassung des Objekts erfasst.

Vorzugsweise ist das Erfassungsgerät aus mehreren Geräten aufgebaut, z.B. einer Videokamera, einer Kamera und und/oder einem Zeiterfassungsgerät mit integrierten Ortsinformationen.

Bevorzugt wird basierend auf dieser Auswahl kein passender Eintrag gefunden, so wird die Person als unbekannt behandelt und der klassische biometrische Abgleich mit den objektspezifischen Merkmalen ohne Bilden einer Unterobjektmenge durchgeführt.

Bevorzugt wird für die Optimierung der Auswertung der Datenbankeninhalte die FIT-Funktion als Basis genommen.

Das Objekt kann beispielsweise eine Person oder ein Tier sein.

Durch Verknüpfung der objektspezifischen mit den objektergänzenden Merkmale eines Objekts ist eine stark reduzierte Rechenzeit zur Erkennung und Identifizierung des Objekts erzielbar.

Zusammengefasst ergeben sich ein optimierter Entscheidungsbaum und damit ein optimiertes Verfahren für die Identifikation von Personen.

Die Erfindung wird anhand der folgenden Figuren näher erläutert.

Es zeigen:
- Figur 1: ein System zur Erfassung und automatischen Identi- fizierung eines Objekts bzw. einer Person.
- Figur 2: ein Organigramm zur Darstellung eines Verfahrens zum rechnergestützten Erkennen der Identität eines Objekts.

- Figur 3: ein weiteres System zur Erfassung und automatischen Identifizierung eines Objekts bzw. einer Person.

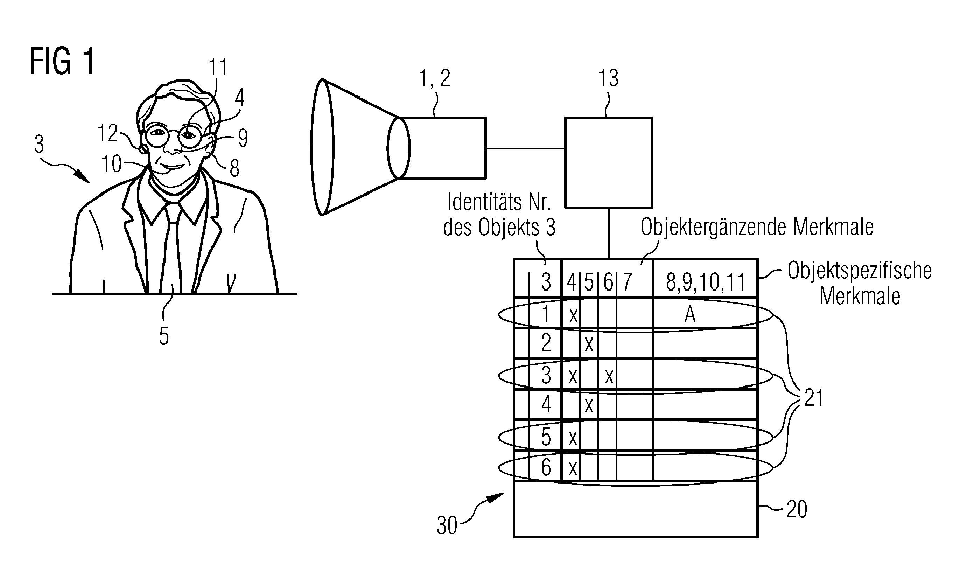

In Figur 1 ist ein System zum rechnergestützten Erkennen der Identität eines Objektes 3 dargestellt.

Eine Videokamera 1, 2, die optional Zeit- und Ortsinformationen der Objekterfassung aufnehmen kann, erfasst die Person 3, die objektspezifische Merkmale 8,9,10,11 und objektergänzende Merkmale 4,5 aufweist. Objektergänzende Merkmale sind hier als Krawatte 5, Ohrring 12 und Brille 4 ausgebildet. Weitere objektergänzende Merkmale können ein Halstuch, eine Kopfbedeckung, ein Schal, Ohrknopf oder ein Hörgerät, sind in Figur 1 aber nicht dargestellt. Objektspezifische Merkmale sind hier als Form und Farbe der Augen 11, Form des Mundes 10, Form der Nase 9 und geometrische Proportionen der Nase 9, Ohren 8, Augen 11 und des Mundes 10 zueinander ausgebildet.

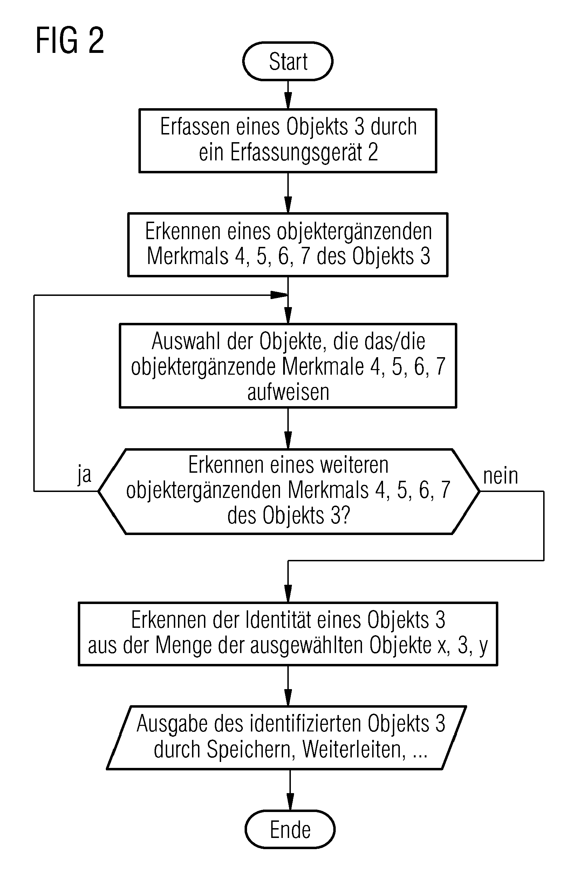

Ein Rechner 13 ist mit der Videokamera 1, 2 verbunden und wertet die von der Videokamera 1, 2 erhaltenen Signale aus. Weiterhin ist der Rechner 13 mit einer Datenbank 30 verbunden, die einen im Folgenden Objektmenge 20 genannten Referenzmerkmalsdatensatz enthält. Der Referenzmerkmalsdatensatz setzt sich zusammensetzen aus der Identitätsnummer des Objekts 3, den objektergänzenden Merkmalen 4, 5, 6, 7 und den objektspezifischen Merkmalen 8, 9, 10, 11. Durch das in Figur 2 beschriebene Verfahren zum rechnergestützten Erkennen der Identität eines Objekts werden aus der Objektmenge 20 eine Unterobjektmenge 21 gebildet, indem die objektergänzenden Merkmale 4,5,6,7 des erfassten Objekts 3 mit den Referenzdaten in der Objektmenge 20 verglichen werden. So wird beispielsweise die Brille 4 von Personen mit den Identitätsnummern 1, 3, 5 und 6 getragen, die eine Unterobjektmenge 21 ergeben.

Figur 2 zeigt das Organigramm, in dem schematisch dargestellt wird, wie in dem System gemäß Figur 1 ein rechnergestütztes Erkennen der Identität einer Person 3 durchführbar ist. Das Verfahren wird gestartet, indem die Person 3 in den Erfassungsbereich der Videokamera 1, 2 gelangt. Die Videokamera 1,2 erfasst das Objekt 3 vorzugsweise automatisch. Von der Person 3 werden sowohl die objektspezifischen als auch die objektergänzenden Merkmale erfasst.

Der Rechner 13 wertet von der Videokamera 1,2 erhaltenen Signale aus und führt mit Hilfe eines Algorithmus eine Auswertung und Suche nach objektergänzenden Merkmalen 4, 5, 6, 7 des Objekts 3 durch. Für die rechnergestützte Erkennung von objektergänzenden Merkmalen wie z.B. Accessoires (Brillen, Schmuck, Uhren, typische Kleidung, Auto, RFID Tags,...) existieren komfortable Merkmalsdatenbanken. Der Rechner hat die entsprechenden objektergänzenden Merkmale 4, 5, 6, 7 erkannt.

Im nächsten Schritt wird der Rechner 13 aus der Objektmenge 20 die Objekte 3 auswählen, die das bzw. die objektergänzenden Merkmale 4, 5, 6, 7/4,5,12 aufweisen und daraus eine entsprechende Unterobjektmenge 21 bilden.

Bei Vorliegen von mehreren objektergänzenden Merkmalen werden entweder die Merkmale sequentiell nacheinander (Schleifenstruktur) erfasst und erkannt oder in einem parallelen Algorithmus in einem einzigen Verfahrensschritt erfasst und erkannt.

So sind nun in einer Unterobjektmenge 21 alle die Objekte mit einer entsprechenden Identitätsnummer enthalten, die ein oder mehrere der objektergänzenden Merkmale aufweisen. Mit Hilfe von biometrischen Identitätserkennungsalgorithmen erhält der Rechner 13 aus der Unterobjektmenge 20, d.h. der Referenzmenge zur Erkennung der Identität, die Identität 5 der Person 3.

In einem nächsten Schritt wird die Identitätsnummer des identifizierten Objekts 3 weiter bearbeitet, beispielsweise durch Speichern in einer Datenbank oder Weiterleiten an eine Sicherheitsschleuse. Das System ist nun bereit für die Erfassung und Erkennung des nächsten Objekts / der nächsten Person 3 (Ende der Identifizierung->Sprung zum Anfang).

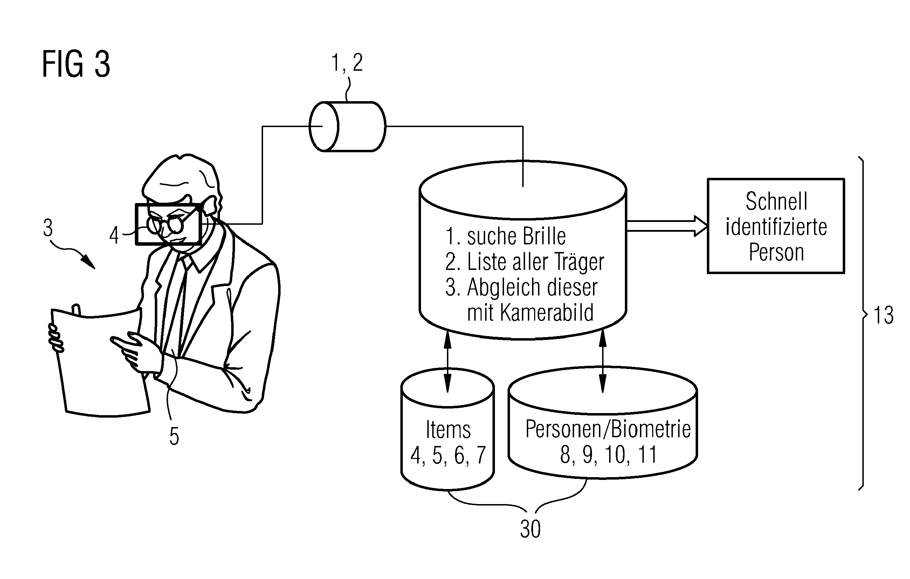

In Figur 3 ist ein weiteres System zum rechnergestützten Erkennen der Identität eines Objektes 3 dargestellt, wobei funktionsgleiche Merkmale die Bezugszeichen der Figur 1 erhalten.

Eine Videokamera 1, 2, erfasst die Person 3, die eine Brille 4 aufgesetzt hat. Weiterhin trägt die Person 3 eine Krawatte 5.

Ein Rechner 13 ist mit der Videokamera 1, 2 verbunden und wertet die von der Videokamera 1, 2 erhaltenen Signale aus. Weiterhin ist der Rechner 13 mit einer Datenbank 30 verbunden, die einen im Folgenden Objektmenge 20 genannten Referenzmerkmalsdatensatz enthält. Der Referenzmerkmalsdatensatz setzt sich zusammensetzen aus der Identitätsnummer des Objekts 3, den objektergänzenden Merkmalen 4, 5, 6, 7 und den objektspezifischen Merkmalen 8, 9, 10, 11. Durch das in Figur 2 beschriebene Verfahren zum rechnergestützten Erkennen der Identität eines Objekts werden aus der Objektmenge 20 eine Unterobjektmenge 21 gebildet, indem die objektergänzenden Merkmale 4,5,6,7 des erfassten Objekts 3 mit den Referenzdaten in der Objektmenge 20 verglichen werden. Dabei sucht und erkennt das im Rechner 13 ablaufende Verfahren die Brille 4, durchsucht die Datenbank 30 nach allen Personen, die eine Brille tragen und gleicht die gefundenen Personen mit Hilfe von biometrischen Auswertungen, z.B. durch Gesichtserkennung, mit der Datenbank 30 ab, wodurch eine Person schnell identifizierbar ist.

## Patentansprüche

1. Verfahren zum rechnergestützten Erkennen der Identität eines Objekts (3) aus einer Objektmenge (20),
wobei
- jedes Objekt (3) mindestens ein objektergänzendes Merkmal (4,5,6,7) aufweist,
- jedes Objekt (3) objektspezifische Merkmale (8,9,10,11) aufweist,
- die Objektmenge (20) eine Vielzahl von Objekten (3) aufweist, denen jeweils objektergänzende (4,5,6,7) und objektspezifische (8,9,10,11) Merkmale zugeordnet sind,
wobei folgende Schritte ausgeführt werden:
- Erfassen eines Objekts (3) durch ein Erfassungsgerät (1,2),
- rechnergestütztes Erkennen mindestens eines objektergänzenden Merkmals (4,5,6,7),
- rechnergestütztes Bilden einer Unterobjektmenge (21) aus der Objektmenge (20), die diejenigen Objekte (3) enthält, die ein erkanntes objektergänzendes Merkmal (4,5,6,7) enthält,
- rechnergestütztes Erkennen der Identität eines in der Unterobjektmenge (21) enthaltenen Objekts (3) durch rechnergestütztes Auswerten von objektspezifischen Merkmalen (8,9,10,11).

2. Verfahren nach Anspruch 1,
**dadurch gekennzeichnet, dass** ein objektergänzendes Merkmal (4,5,6,7) ein Ding oder Accessoire ist, das an dem Objekt (3) angebracht ist, beispielsweise eine Brille (4), ein Schal, ein Halstuch, eine Kopfbedeckung, ein Ohrring (12), ein Ohrknopf, ein Hörgerät, ein Gesichtsschmuck, ein Piercing, eine Krawatte (5), eine Fliege, eine Tätowierung, eine Uhr, eine Perücke, ein Toupet, ein künstlicher Leberfleck und/oder die Farbe einer Schminke.

3. Verfahren nach einem der vorigen Ansprüche,
**dadurch gekennzeichnet, dass** das objektergänzendes Merkmal (4,5,6,7) eine Information ist, wie beispielsweise Ort oder Uhrzeit zum Zeitpunkt der Erfassung des Objekts (3) durch das Erfassungsgerät (1,2) und/oder die in einem an dem Objekt angebrachte Information eines RFID-Geräts/Chips.

4. Verfahren nach einem der vorherigen Ansprüche,
**dadurch gekennzeichnet, dass** die objektspezifischen Merkmale (8, 9, 10, 11) biometrische Informationen des Objekts (3) darstellen, wie beispielsweise die Gesichtsgeometrie (8, 9, 10, 11) und/oder Gesichtseigenschaften (8, 9, 10, 11).

5. Verfahren nach einem der vorherigen Ansprüche,
**dadurch gekennzeichnet, dass** bei der erfolgreichen Identifizierung des Objekts (3) ein am Objekt (3) neu erkanntes objektergänzendes Merkmal (4,5,6,7) zu dem objektspezifischen Datensatz der Objektmenge (20) hinzugefügt wird.

6. Verfahren nach einem der vorherigen Ansprüche,
**dadurch gekennzeichnet, dass** bei einer Identifizierungswahrscheinlichkeit des Objekts (3) von größer als neunzig Prozent (90%) ein neu erkannte objektergänzendes Merkmal (4,5,6,7) des Objekts (3) zu dem objektspezifischen Datensatz der Datenmenge (20) hinzugefügt wird.

7. Verfahren nach einem der vorherigen Ansprüche,
**dadurch gekennzeichnet, dass** das Erfassungsgerät (1,2) als Kamera (1,2)ausgebildet ist und/oder der Ort des Erfassungsgeräts (1,2) und Zeitangaben der Erfassung des Objekts (3) erfasst wird.

8. Verfahren nach einem der vorherigen Ansprüche,
**dadurch gekennzeichnet, dass** das Erfassungsgerät (1,2) mehrere Einzel-Erfassungsgeräte aufweist.

9. Verfahren nach einem der vorherigen Ansprüche,
**dadurch gekennzeichnet, dass** das Objekt (3) eine Person (3) oder ein Tier ist.

10. Verfahren nach einem der vorherigen Ansprüche,
**dadurch gekennzeichnet, dass** die Identifizierung der objektspezifischen Merkmale (8,9,10) durch biometrische Gesichtserkennung erfolgt.

11. Verfahren nach einem der vorherigen Ansprüche,
**dadurch gekennzeichnet, dass** ein objektergänzendes Merkmal (4,5,6,7) mehrere Merkmale aufweist.

12. Verfahren nach einem der vorigen Ansprüche,
**dadurch gekennzeichnet, dass** wenn kein objektergänzendes Merkmal (4,5,6,7) automatisch erkannt wird, die Unterobjektmenge (21) gleich der Objektmenge (20) ist.

13. Verfahren nach einem der vorigen Ansprüche,
**dadurch gekennzeichnet, dass** für die Optimierung der Erkennungsverfahren eine Fit-Funktion als Basis genommen wird.

14. Vorrichtung zum Durchführen des Verfahrens nach einem der vorherigen Verfahrensansprüche mit
- einem Erfassungsgerät (1) zum Erfassen eines objektergänzenden Merkmals (4,5,6,7) und/oder zum Erfassen eines objektspezifischen Merkmals (8,9,10,11),
- einer Recheneinheit (13) zum automatischen Erkennen mindestens eines objektergänzenden Merkmals (4,5,6,7) und zum automatischen Erkennen von objektspezifischen Merkmalen (8,9,10,11) zur Identifizierung des Objekts (3).
